# EUROPEAN PATENT APPLICATION

(11) **EP 3 553 351 A1**
(43) Date of publication of application: **16.10.2019**
(21) Application number: 16923181.8
(22) Date of filing: 08.12.2016
(51) Int. Cl.: F16J 15/10

(54) **SEAL STRUCTURE USING O-RING**

(71) Applicant: Harmonic Drive Systems Inc., Shinagawa-ku Tokyo 140-0013 (JP)
(72) Inventor: MOCHIDUKI Yoshihiko, Azumino-shi Nagano 399-8305 (JP); KODAIRA Takeo, Azumino-shi Nagano 399-8305 (JP); KOBAYASHI Syuhei, Azumino-shi Nagano 399-8305 (JP); TAKADA Yoshimitsu, Azumino-shi Nagano 399-8305 (JP)
(74) Representative: TBK
(86) International application number: PCT/JP2016/086647
(87) International publication number: WO 2018/105094

(57) **Abstract**

A mounting groove (6) of a seal structure (3) using an O-ring (5) is defined by: a groove bottom surface (11); an acute-angle-side groove side surface (12) inclined at an acute angle contiguously to the radially inner edge of the groove bottom surface (11); and an obtuse-angle-side groove side surface (13) inclined at an obtuse angle contiguously to the radially outer edge of the groove bottom surface (11). The O-ring (5) is mounted in a state of being pushed and expanded to the acute-angle-side groove side surface (12). The O-ring (5) is constrained, in the mounting groove (6), between the groove bottom surface (11) and the acute-angle-side groove side surface (12). The O-ring (5) is prevented from falling off from the mounting groove (6). A groove width is constant or increases from the groove bottom surface (11) toward a groove opening (14). Work for mounting the 0-ring (5) on the mounting groove (6) is easy, and processing for the mounting groove (6) is also easy.

## Description

### TECHNICAL FIELD

The present invention relates to a seal structure that uses an O-ring to create a seal between two members, and particularly relates to a shape of a mounting groove for mounting an O-ring.

### BACKGROUND ART

O-rings are seal rings circular in cross-section and composed of synthetic rubber or another elastic material, and are widely used. An O-ring is mounted between two members that face each other or come into contact with each other, the O-ring being mounted in a mounting groove formed in one member and crushed a predetermined amount by the other member, whereby a seal is created between the members.

The mounting groove for the O-ring is commonly rectangular in cross-section, having a constant width and constant depth and opening in surfaces of the members. An O-ring mounted in a groove of rectangular cross-section will sometimes fall out. Particularly, when the O-ring is mounted in the mounting groove in a stretched state (expanded radially outward under pressure), the O-ring readily falls out of the mounting groove due to tension.

In some cases, a dovetail groove is used as the mounting groove in order to prevent the O-ring from falling out of the mounting groove. A dovetail groove has a trapezoidal cross-sectional shape such that a groove width gradually narrows from a groove bottom surface toward a groove opening; the dovetail groove being effective in preventing the O-ring from falling out. FIGS. 7 and 8 of Patent Document 1 illustrate an example in which a dovetail groove is used as a mounting groove for an 0-ring.

Patent Document 2 discloses a seal structure using an elastic seal having a complex cross-sectional shape that is not circular. In a mounting groove of the seal structure disclosed in this document, one groove side surface is an orthogonal surface that is orthogonal to a member surface, and another groove side surface is an inclined surface that is inclined toward a groove bottom surface in a direction in which a groove width expands. A flat surface formed in an elastic seal that is a deformed triangle in cross-section is pressed against the orthogonal surface of the mounting groove. The elastic seal is thereby prevented from falling out of the mounting groove.

### PRIOR ART LITERATURE

### PATENT DOCUMENTS

Patent Document 1: JP-A 2009-144735
Patent Document 2: JP-A 2008-32033

### SUMMARY OF THE INVENTION

### PROBLEMS TO BE SOLVED BY THE INVENTION

Forming the O-ring mounting groove into the shape of a dovetail groove is advantageous in preventing the O-ring from falling out. However, the groove opening is narrow and the work of mounting the O-ring is therefore more difficult than with a mounting groove having a rectangular cross section. The work of mounting is particularly difficult when the O-ring is mounted in a stretched state in the mounting groove, because the O-ring must be mounted through the narrow groove opening while having been appreciably pressed and expanded. The work of machining a mounting groove having a dovetail groove shape, in which the groove width increases toward the groove bottom surface, is also more difficult than in a case of machining a mounting groove having a rectangular cross-section, and a special tip for machining is required.

The mounting groove shape disclosed in Patent Document 2 could be used as an O-ring mounting groove. As with the mounting groove having a rectangular cross-section, the problem of the O-ring readily falling out from the mounting groove along an orthogonal surface, which is a groove side surface, is also encountered with this mounting groove shape. Additionally, the work of machining the mounting groove is also more difficult than with a common O-ring mounting groove having a rectangular cross-section, because the groove opening is narrow and the groove width gradually increases from the groove opening toward the groove bottom surface.

An object of the present invention is to provide an easily machined seal structure in which an O-ring can be easily mounted and the mounted O-ring does not readily fall out.

### MEANS OF SOLVING THE PROBLEMS

A seal structure with an O-ring according to the present invention is configured from the O-ring for creating a seal between a first end surface on a side of a first member and a second end surface on a side of a second member, and a mounting groove that is formed in the first member and that opens into the first end surface in order to mount the O-ring. When the mounting groove is sectioned by a plane containing a center axis of the O-ring, a cross-sectional shape of the mounting groove is defined by a groove bottom surface parallel to the first end surface, an acute-angle-side groove side surface that is contiguous with either one of a radially inner edge or a radially outer edge in the groove bottom surface and that extends in a direction forming an acute angle with the groove bottom surface, and an obtuse-angle-side groove side surface that is contiguous with the other one of the radially inner edge and the radially outer edge in the groove bottom surface and that extends in a direction forming an obtuse angle with the groove bottom surface. Furthermore, the O-ring is mounted in the mounting groove in a state of being pressed against the acute-angle-side groove side surface from a radial direction of the O-ring.

The O-ring is pressed against the acute-angle-side groove side surface and constrained between the groove bottom surface and the acute-angle-side groove side surface in a state of having been mounted in the mounting groove. The O-ring is thereby effectively prevented from falling out of the mounting groove.

A surface shape and angle of inclination of the obtuse-angle-side groove side surface in the mounting groove can be set with consideration given to the ease of mounting the O-ring and the machinability of the mounting groove. Consequently, the present invention has merit in that a mounting groove can be obtained with which the work of mounting the O-ring in the mounting groove is easier and the mounting groove is more easily machined than with a prior-art mounting groove.

The state in which the O-ring is pressed against the acute-angle-side groove side surface can be formed by making use of a pressure difference between portions sealed by the O-ring. Specifically, when viewed along the radial direction of the 0-ring, the obtuse-angle-side groove side surface is formed at the side where pressure in the mounting groove is relatively high, and the acute-angle-side groove side surface is formed at the side where pressure is relatively low. In a state of use, the O-ring mounted in the mounting groove comes to be pressed against the acute-angle-side groove side surface due to the pressure difference.

A state in which the O-ring is pressed against the acute-angle-side groove side surface can be formed using elastic force of the O-ring, which is formed from synthetic rubber or another elastic material. Specifically, when viewed along the radial direction of the O-ring, a radially-inner-side groove side surface of the mounting groove is the acute-angle-side groove side surface, and a maximum circumferential length of the radially-inner-side groove side surface is greater than an internal circumferential length of the O-ring. The O-ring is mounted in the mounting groove in a state of having been expanded under pressure, and the O-ring comes to be pressed against the radially-inner-side groove side surface by elastic return force.

The cross-sectional shape of the mounting groove can as a whole be parallelepipedal. Specifically, the obtuse-angle-side groove side surface of the mounting groove is an inclined surface parallel with the acute-angle-side groove side surface, and a groove width of the mounting groove is constant from the groove bottom surface to a groove opening. It is also possible to set the angle of inclination of the acute-angle-side groove side surface and the angle of inclination of the obtuse-angle-side groove side surface so that the groove width gradually increases from the groove bottom surface toward the groove opening, so that the groove is more easily machined.

### BRIEF DESCRIPTION OF THE DRAWINGS

FIG. 1A is a schematic cross-sectional view showing one example of a seal structure to which the present invention is applied;
FIG. 1B is an explanatory drawing showing a shape of a mounting groove of the seal structure of FIG. 1A;
FIG. 2 is a longitudinal cross-sectional view showing one example of a strain wave gearing provided with the seal structure of the present invention;
FIG. 3A is a longitudinal cross-sectional view showing an outer race of a cross-roller bearing and an externally toothed gear in FIG. 2.; and
FIG. 3B is an explanatory drawing showing a shape of a mounting groove of FIG. 3A.

### MODE FOR CARRYING OUT THE INVENTION

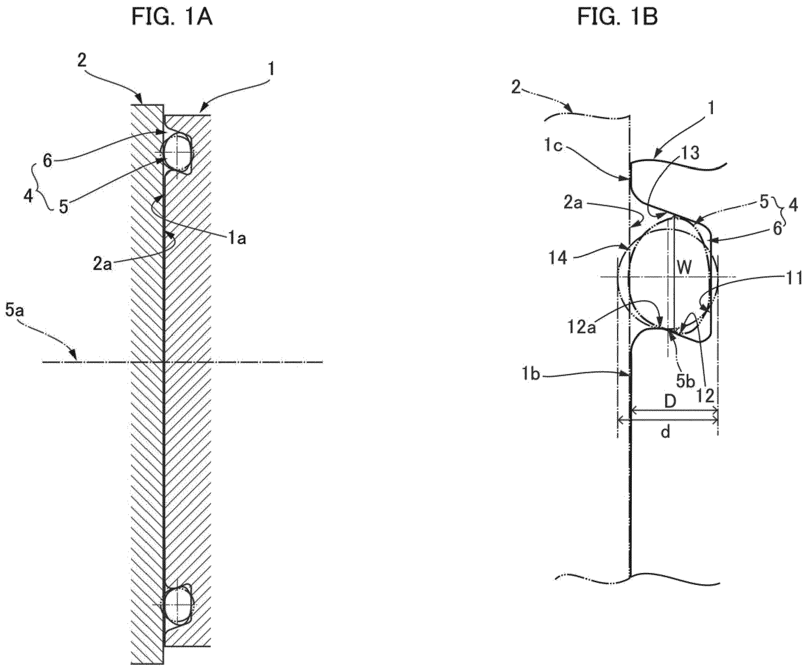

Below is a description, made with reference to the drawings, of an embodiment of a seal structure to which the present invention is applied. FIG. 1A is a schematic cross-sectional view showing one example of an embodiment of a seal structure to which the present invention is applied. A seal structure 4 for creating a seal between a first member 1 and a second member 2 is configured from an O-ring 5 and a mounting groove 6 for mounting the O-ring 5. The O-ring 5 is an elastic ring, circular in cross-section, formed from synthetic rubber or another elastic material. In the present example, the mounting groove 6 is a ring-shaped groove having a cross-sectional shape that is substantially parallelepipedal.

The mounting groove 6 is formed on a side of the first member 1, and opens in a first end surface 1a of this member. The first end surface 1a of the first member 1 faces or is in contact with a second end surface 2a on a side of the second member 2. The O-ring 5 is mounted in the mounting groove 6 in a state of being crushed by the first member 1 and the second member 2. The space between the first end surface 1a and the second end surface 2a is sealed by the O-ring mounted in the mounting groove 6 in a crushed state.

FIG. 1B is an explanatory drawing showing the cross-sectional shape of the mounting groove 6. Below is a description of the cross-sectional shape of the mounting groove 6, i.e., the cross-sectional shape when the groove is sectioned by a plane containing a center axis 5a of the O-ring 5. The cross-sectional shape of the mounting groove 6 is defined by a groove bottom surface 11, an acute-angle-side groove side surface 12 (a radially-inner-side groove side surface) contiguous with an edge of the groove bottom surface 11 which lies at a radially inner side of the O-ring, and an obtuse-angle-side groove side surface 13 (a radially-outer-side groove side surface) contiguous with an edge of the groove bottom surface 11 which lies at a radially outer side. The space between a tip end of the acute-angle-side groove side surface 12 at the groove opening side and a tip end of the obtuse-angle-side groove side surface 13 at the groove opening side constitutes a groove opening 14 of constant width.

The groove opening 14 is a ring-shaped groove, and the first end surface 1a of the first member 1 is divided by the groove opening 14 into a radially-inner-side end surface portion 1b and a radially-outer-side end surface portion 1c. The tip end of the acute-angle-side groove side surface 12 at the groove opening side is contiguous with a radially outer edge of the radially-inner-side end surface portion 1b, and the tip end of the obtuse-angle-side groove side surface 13 at the groove opening side is contiguous with a radially inner side edge of the radially-outer-side end surface portion 1c.

The groove bottom surface 11 is a flat surface that has a constant width and that is parallel to the first end surface 1a. The acute-angle-side groove side surface 12 is an inclined surface contiguous with the radially inner edge of the groove bottom surface 11 and extending in a direction that forms an acute angle with the groove bottom surface 11. The obtuse-angle-side groove side surface 13 is an inclined surface contiguous with the radially outer edge of the groove bottom surface 11 and extending at an angle that forms an obtuse angle with the groove bottom surface 11. Internal corner portions between the groove bottom surface 11 and the acute-angle-side groove side surface 12 are smoothly connected by a concave surface, and internal corner portions between the groove bottom surface 11 and the obtuse-angle-side groove side surface 13 are also smoothly connected by a concave surface. Additionally, external corner portions between the acute-angle-side groove side surface 12 and the radially-inner-side end surface portion 1b are smoothly connected by a convex surface, and external corner portions between the obtuse-angle-side groove side surface 13 and the radially-outer-side end surface portion 1c are smoothly connected by a convex surface.

In the present example, the acute-angle-side groove side surface 12 and the obtuse-angle-side groove side surface 13 are parallel inclined surfaces. The angle of inclination of the acute-angle-side groove side surface 12 relative to the groove bottom surface 11 is an acute angle of approximately 60 to 70°. This angle is 70° in the example shown in the drawings. The angle of inclination of the obtuse-angle-side groove side surface 13 relative to the groove bottom surface 11 can be set to an angle having a supplementary angle relationship with the angle of inclination at the acute-angle-side groove side surface 12, or to an angle greater than this angle.

The acute-angle-side groove side surface 12 is set to an appropriate surface shape and angle of inclination so as to exhibit a function of preventing the O-ring 5 mounted in the mounting groove 6 from falling out. Additionally, the acute-angle-side groove side surface 12 is formed so that once the 0-ring 5, which has a circular cross-section before being crushed, has been mounted in the mounting groove 6, a maximum-circumferential-length region 12a of the acute-angle-side groove side surface 12 is positioned nearer to the groove opening 14 than is a minimum-circumferential-length region 5b of the O-ring 5. The surface shape and angle of inclination of the obtuse-angle-side groove side surface 13 have a high degree of freedom and can be set with consideration given to the ease of mounting the O-ring 5 and the ease of machining the mounting groove 6. From these standpoints, the surface shape and angle of inclination of the obtuse-angle-side groove side surface 13 are preferably set so that a groove width W of the mounting groove either remains constant or gradually increases from the groove bottom surface 11 toward the groove opening 14. The acute-angle-side groove side surface 12 and the obtuse-angle-side groove side surface 13, except for both end portions thereof, are defined by flat surfaces. The acute-angle-side groove side surface 12 and the obtuse-angle-side groove side surface 13 can also be defined by curved surfaces.

An O-ring line diameter d of the O-ring 5 is a dimension obtained by adding a squeeze allowance of the O-ring and an interval D (groove depth) from the groove bottom surface 11, to the second end surface 2a, as is publicly known. The groove width W of the mounting groove 6 is a dimension greater than the O-ring line diameter d. Therefore, a minimum circumferential length of the obtuse-angle-side groove side surface 13 of the mounting groove 6 is longer than an external circumferential length of the O-ring. Additionally, a squeeze ratio of the 0-ring 5 is a value of approximately, for example, 30% at maximum in the case of a fixed seal structure (static seal) in which the first and second members 1, 2 do not move relative to each other. In the case of a sliding or rotating seal structure (dynamic seal) in which the first and second members 1, 2 move relative to each other, this value is lower than in the case of a fixed seal structure.

The O-ring 5 is mounted in the mounting groove 6 in a state of having been pressed against the acute-angle-side groove side surface 12. In the present example, a maximum circumferential length of the acute-angle-side groove side surface 12, which is an internal-circumferential-side groove side surface of the mounting groove 6, is set so as to be greater than an internal circumferential length of the O-ring 5. Therefore, to mount the O-ring 5 in the mounting groove 6, the O-ring 5 is expanded under pressure and mounted between the acute-angle-side groove side surface 12 and the groove bottom surface 11. The O-ring 5 can be prevented from falling out of the mounting groove 6 because the O-ring 5 is mounted in the mounting groove 6 in a state of having been pressed against the acute-angle-side groove side surface 12.

Inside the mounting groove 6 of the present example, the pressure at a radially inner side of the O-ring 5 is relatively higher than that at a radially outer side of the O-ring 5. The state in which the O-ring 5 has been pressed against the acute-angle-side groove side surface 12 is formed or maintained by this pressure difference.

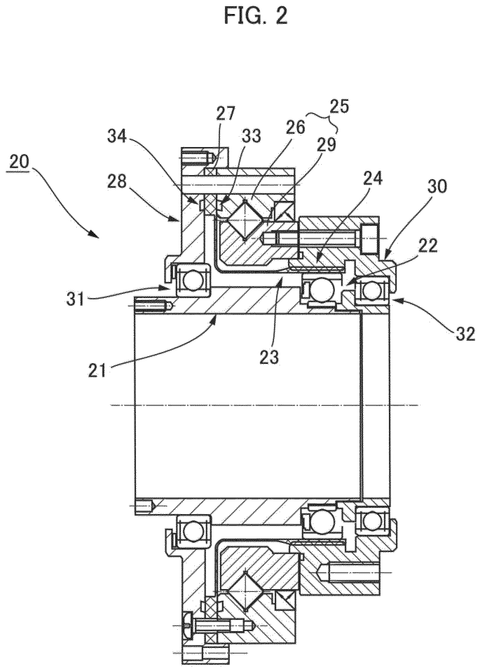

FIG. 2 is a schematic longitudinal cross-sectional view showing a strain wave gearing which is an example of applying the seal structure configured as described above. The strain wave gearing 20 shown in this drawing is a unit-type strain wave gearing, provided with a hollow input shaft 21, a wave generator 22 assembled on an external circumferential surface of the hollow input shaft 21, a flexible top-hat-shaped externally toothed gear 23 made to flex into an ellipsoidal shape by the wave generator 22, a rigid internally toothed gear 24 surrounding the externally toothed gear 23, and a cross-roller bearing 25 supporting the externally toothed gear 23 and the internally toothed gear 24 so as to allow the two gears to rotate relative to each other.

An outer race 26 of the cross-roller bearing 25 is secured to a disc-shaped unit end plate 28 disposed at one axial-end side of the hollow input shaft 21, with a rigid ring-shaped boss 27 of the externally toothed gear 23 interposed therebetween. The internally toothed gear 24 is secured to an inner race 29 of the cross-roller bearing 25. Integrally formed in the internally toothed gear 24 is a disc-shaped unit end plate portion 30 positioned at the other axial-end side of the hollow input shaft 21. Shaft-end parts at both sides of the hollow input shaft 21 are rotatably supported respectively by the unit end plate 28 and the unit end plate portion 30, via ball bearings 31, 32.

A seal is created by a seal structure 33 using an O-ring between the outer race 26 of the cross-roller bearing 25 and the boss 27 of the externally toothed gear 23. Similarly, a seal is created by a seal structure 34 using an O-ring between the boss 27 and the unit end plate 28. The seal structure 4 shown in FIGS. 1A and 1B is used for these seal structures 33, 34.

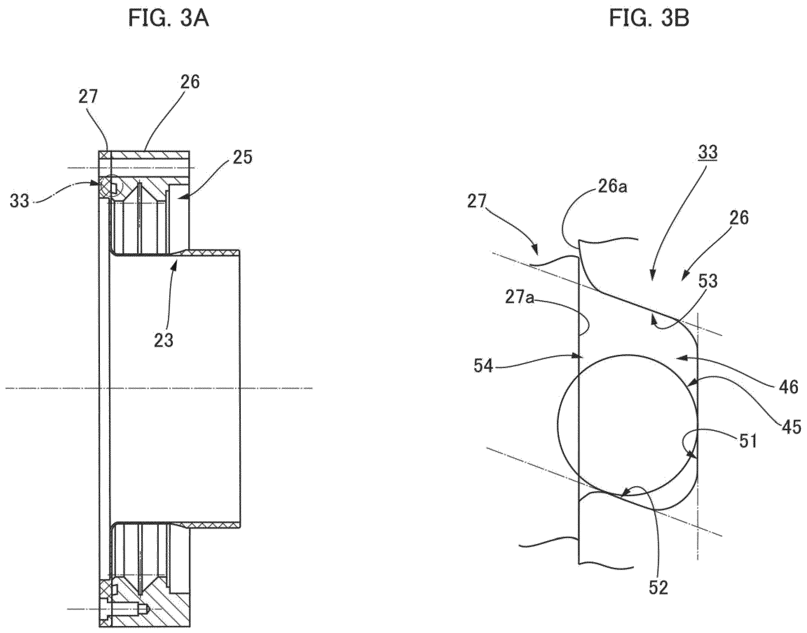

FIG. 3A is a cross-sectional view showing the outer race 26 and the externally toothed gear 23, and FIG. 3B is an explanatory drawing showing a cross-sectional shape of a mounting groove of the seal structure 33. A mounting groove 46 of the seal structure 33 is formed in the outer race 26 (first member), and opens in an end surface 26a (first end surface) thereof. The end surface 26a of the outer race 26 is in contact with an end surface 27a (second end surface) of the boss 27 (second member). An O-ring 45 is mounted in the mounting groove 46 in a state of having been crushed by the outer race 26 and the boss 27. The state of a circular cross-section before crushing is shown in the drawing.

A cross-sectional shape of the mounting groove 46 is substantially parallelepipedal, and is defined by a groove bottom surface 51, an acute-angle-side groove side surface 52 (a radially-inner-side groove side surface) contiguous with a radially inner edge of the groove bottom surface 51, and an obtuse-angle-side groove side surface 53 (a radially-outer-side groove side surface) contiguous with a radially outer edge of the groove bottom surface 51. The space between a tip end of the acute-angle-side groove side surface 52 and a tip end of the obtuse-angle-side groove side surface 53 constitutes a groove opening 54 having a constant width. The shapes of the respective parts of the mounting groove 46 are the same as those of the mounting groove 6 of the seal structure shown in FIGS. 1A and 1B, and descriptions thereof are therefore omitted.

In the seal structures 4, 33 described above, the radially-inner-side groove side surfaces of the mounting grooves 6, 46 of the O-rings 5, 45 are the acute-angle-side groove side surfaces 12, 52, of which the angles of inclination relative to the groove bottom surfaces 11, 51 are acute angles. The radially-outer-side groove side surfaces of the mounting grooves are the obtuse-angle-side groove side surfaces 13, 53, of which the angles of inclination relative to the groove bottom surfaces 11, 51 are obtuse angles. When the O-rings 5, 45 have been mounted in the mounting grooves 6, 46, the O-rings 5, 45 come to be pressed against the acute-angle-side groove side surfaces 12, 52. Consequently, the O-rings 5, 45 are prevented from falling out of the mounting grooves 6, 46. Additionally, the work of machining the mounting grooves 6, 46 is easily performed and the work of mounting the O-rings 5, 45 in the mounting grooves 6, 46 is easy, because the groove widths of the mounting grooves 6, 46 either remain constant or gradually increase from the groove bottom surfaces 11, 51 toward the groove openings 14, 54. Furthermore, the surface shapes and angles of inclination of the obtuse-angle-side groove side surfaces 13, 53 have a high degree of freedom, and these seal structures therefore have merit from this respect as well, in that the grooves are easily machined.

The embodiments described above are examples in which the seal structure of the present invention is applied to a strain wave gearing. As shall be apparent, the present invention can also be applied to sealing portions of devices and components other than strain wave gearings.

## Claims

1. A seal structure comprising:
an O-ring to seal between a first end surface on a side of a first member and a second end surface on a side of a second member; and
a mounting groove formed in the first member to mount the O-ring,
wherein, when the mounting groove is sectioned by a plane containing a center axis of the O-ring, a cross-sectional shape of the mounting groove is defined by:
a groove bottom surface parallel to the first end surface;
an acute-angle-side groove side surface that is contiguous with either one of a radially-inner-side edge and a radially-outer-side edge of the groove bottom surface, the acute-angle-side groove side surface extending in a direction forming an acute angle with the groove bottom surface; and
an obtuse-angle-side groove side surface that is contiguous with the other one of the radially-inner-side edge and the radially-outer-side edge of the groove bottom surface, the obtuse-angle-side groove side surface extending in a direction forming an obtuse angle with the groove bottom surface, and
wherein the O-ring is mounted in the mounting groove in a state of being pressed against the acute-angle-side groove side surface from the radial direction of the O-ring.

2. The seal structure according to claim 1,
wherein a pressure in a portion of the mounting groove at one side of the O-ring where the obtuse-angle-side groove side surface is formed is relatively high in comparison with a pressure in a portion of the mounting groove at the other side of the O-ring where the acute-angle-side groove side surface is formed, and
the O-ring mounted in the mounting groove is in the state of being pressed against the acute-angle-side groove side surface by pressure difference in the mounting groove.

3. The seal structure according to claim 1,
wherein the acute-angle-side groove side surface is a radially-inner-side groove side edge of the mounting groove;
a maximum circumferential length of the acute-angle-side groove side surface in the mounting groove is greater than an internal circumferential length of the O-ring;
a minimum circumferential length of the obtuse-angle-side groove side surface in the mounting groove is greater than an external circumferential length of the O-ring; and
the O-ring is in the state of being pressed against the internal-circumferential-side groove side surface by elastic return force.

4. The seal structure according to claim 1,
wherein a groove width of the mounting groove is constant from a groove opening formed in the first end surface toward the groove bottom surface, or the groove width gradually decreases from the groove opening toward the groove bottom surface.

5. The seal structure according to claim 1,
wherein the acute-angle-side groove side surface is a radially-inner-side groove side surface that continuous with and extends from the radially-inner-side edge of the groove bottom surface,
the obtuse-angle-side groove surface is a radially-outer-side groove side surface that continuous with and extends from the radially-outer-side edge of the groove bottom surface,
the acute-angle-side groove side surface extends parallel with the obtuse-angle-side groove side surface,
a pressure in a portion of the mounting groove at one side of the O-ring where the obtuse-angle-side groove side surface is formed is relatively high in comparison with a pressure in a portion of the mounting groove at the other side of the O-ring where the acute-angle-side groove side surface is formed,
a maximum circumferential length of the acute-angle-side groove side surface in the mounting groove is greater than an internal circumferential length of the O-ring;
a minimum circumferential length of the obtuse-angle-side groove side surface in the mounting groove is greater than an external circumferential length of the O-ring; and
the O-ring is in the state of being pressed against the acute-angle-side groove side surface by elastic return force and pressure difference in the mounting groove.
